# EUROPÄISCHE PATENTSCHRIFT

(11) **EP 2 225 448 B1**
(45) Veröffentlichungstag und Bekanntmachung des Hinweises auf die Patenterteilung: **18.02.2015**
(21) Anmeldenummer: 08863834.1
(22) Anmeldetag: 05.12.2008
(51) Int. Cl.: F02D 41/00, F02D 41/22, F02D 21/08

(54) **DIAGNOSEVERFAHREN FÜR ZUSATZVENTILE**
METHOD FOR DIAGNOSING ADDITIONAL VALVES
PROCÉDÉ DE DIAGNOSTIC DE SOUPAPES AUXILIAIRES

(30) Priorität: 21.12.2007 DE 102007062097
(43) Veröffentlichungstag der Anmeldung: 08.09.2010
(73) Patentinhaber: MAHLE International GmbH, 70376 Stuttgart (DE)
(72) Erfinder: ELSÄSSER, Alfred, 75210 Keltern (DE); WARTH, Marco, 73614 Schorndorf (DE)
(74) Vertreter: BRP Renaud & Partner mbB Rechtsanwälte Patentanwälte Steuerberater
(86) Internationale Anmeldenummer: PCT/EP2008/066849
(87) Internationale Veröffentlichungsnummer: WO 2009/080466

(56) Entgegenhaltungen:
- DE-A1- 19 527 030
- DE-A1-102005 006 362
- DE-A1-102005 006 363
- DE-A1-102006 056 367
- US-A- 5 488 938
- US-A1- 2005 199 050

## Beschreibung

Die vorliegende Erfindung betrifft ein Verfahren zur Diagnose wenigstens eines Zusatzventils, das zum Einstellen einer Abgasrückführrate bei einer Abgasrückführeinrichtung einer Brennkraftmaschine in einem Frischgastrakt oder in einem Abgastrakt oder in einer Abgasrückführleitung der Brennkraftmaschine angeordnet ist, mit den Merkmalen des Oberbegriffs des Anspruchs 1.

Eine Brennkraftmaschine, die zur Reduzierung der Stickoxidemissionen mit einer Abgasrückführeinrichtung ausgestattet ist, kann zum Einstellen der vom Betriebspunkt der Brennkraftmaschine abhängigen Abgasrückführrate zumindest ein Zusatzventil aufweisen. Ein derartiges Zusatzventil ist zusätzlich zu Ladungswechselventilen vorhanden. In einer Frischgasleitung kann es stromauf oder stromab einer Einleitstelle für rückgeführtes Abgas angeordnet sein. In einer Abgasleitung kann es zweckmäßig stromab einer Entnahmestelle für rückzuführendes Abgas angeordnet sein. In einer Abgasrückführleitung kann es zwischen der abgasseitigen Entnahmestelle und der frischgasseitigen Einleitstelle angeordnet sein. Insbesondere frischgasseitig können auch mehrere derartige Zusatzventile angeordnet sein. Beispielweise kann die Frischgasleitung stromauf eines Frischgasverteilers, von dem aus einzelne Frischgasrohre die Zylinder der Brennkraftmaschine mit Frischgas versorgen, zumindest zwei parallele Frischgaspfade enthalten, von denen zumindest zwei mit je einem solchen Zusatzventil steuerbar sind. Ebenso ist es grundsätzlich möglich, stromab des Frischgasverteilers in je einem zu einem der Zylinder führenden Frischgasrohre ein derartiges Zusatzventil anzuordnen.

Zumindest dann, wenn das Zusatzventil in der Frischgasleitung angeordnet ist, handelt es sich bei einem derartigen Zusatzventil nicht um eine Drosselklappe, die bei einer herkömmlichen gedrosselten Sauganlage bzw. Frischgasanlage vorhanden ist, um die Frischgaszufuhr zur Brennkraftmaschine betriebspunktabhängig zu drosseln. Das in der Frischgasanlage angeordnete Zusatzventil ist zusätzlich, insbesondere stromab zur Drosselklappe angeordnet. Bei ungedrosselter Frischgasanlage entfällt eine derartige Drosselklappe.

Vorzugsweise handelt es sich bei den hier betrachteten Zusatzventilen um schnellarbeitende Ventile, die im einstelligen Millisekundenbereich zwischen einer Schließstellung und einer Offenstellung verstellbar sind. Insbesondere arbeiten derartige schnellarbeitende Zusatzventile ebenso schnell wie oder sogar schneller als die Ladungswechselventile. Schnellarbeitende Ventile dieser Art lassen sich in der Frischgasleitung grundsätzlich auch zur Impulsaufladung der Brennkraftmaschine nutzen. Im Vordergrund steht hier jedoch die Verwendung derartiger Zusatzventile zum Einstellen der Rückführrate bei einer Abgasrückführeinrichtung. Hierzu können diese Zusatzventile insbesondere so betrieben werden, dass sie durch aufeinanderfolgendes Öffnen und Schließen mit einer vorbestimmten Frequenz Druckschwankungen, die im Frischgas bzw. im Abgas aufgrund der Ladungswechselvorgänge ohnehin vorhanden sind, gezielt nutzen und/oder verstärken, um die Druckdifferenz zwischen der abgasseitigen Entnahmestelle der Abgasrückführeinrichtung und der frischgasseitigen Einleitstelle der Abgasrückführeinrichtung gezielt zu beeinflussen. Durch Erhöhen der Druckdifferenz kann die Abgasrückführrate erhöht werden, während eine Absenkung dieser Druckdifferenz die Abgasrückführrate reduziert. Das jeweilige Zusatzventil lässt sich somit zum Erzeugen und/oder Verstärken von Druckschwingungen im Frischgastrakt und/oder im Abgastrakt ansteuern, um so die Abgasrückführrate einzustellen.

Bei den schnellschaltenden Zusatzventilen ist es dabei insbesondere möglich, die Abgasrückführrate zylinderselektiv einzustellen, das heißt, jedem einzelnen Zylinder der Brennkraftmaschine kann eine individuelle Abgasrückführrate zugemessen werden. Dies kann beispielsweise vorteilhaft sein, um konstruktionsbedingte Abweichungen im Strömungsweg zum jeweiligen Zylinder auszugleichen.

Die Zusatzventile können beispielsweise als diskontinuierlich arbeitende Ventile ausgestaltet sein. Das bedeutet, dass das jeweilige Zusatzventil im Betrieb zwischen einer Schließstellung und einer Offenstellung umschaltbar ist, wobei das jeweilige Ventilglied zwischen zwei Schaltvorgängen in der jeweiligen Schaltstellung vorübergehend ruht. Insbesondere kann es sich bei den beiden Schaltstellungen um Endstellungen handeln, so dass zwischen zwei Schaltvorgängen außerdem die Bewegungsrichtung des Ventilglieds umgekehrt wird. Alternativ kann das jeweilige Zusatzventil auch als kontinuierlich arbeitendes Ventil ausgestaltet sein. Das bedeutet, dass ein Ventilglied permanent in Bewegung ist und dabei zyklisch unterschiedliche Schaltzustände durchläuft. Beispielsweise können ein Öffnungszeitfenster und ein Schließzeitfenster vorgesehen sein, zwischen denen jeweils ein Übergangszeitfenster angeordnet ist. Die insgesamt vier Zeitfenster bilden dann einen Zyklus, der sich permanent wiederholt. Durch die Bewegungsgeschwindigkeit des Ventilglieds lassen sich dann die Zeitfenster verändern. Die Ventilglieder derartiger Zusatzventile können beispielsweise Klappen, insbesondere Schmetterlingsklappen, oder Drehschieber oder dergleichen sein.

Da die Abgasrückführung bei modernen Brennkraftmaschinen einen wesentlichen Beitrag zur Schadstoffreduzierung leistet, ist es aufgrund verschärfter Umweltschutzgesetze erwünscht, die ordnungsgemäße Funktion der Abgasrückführeinrichtung auch während des Betriebs der Brennkraftmaschine bzw. des damit ausgestatteten Kraftfahrzeugs permanent oder in vorgegebenen Zeitintervallen überprüfen zu können. Diese Funktionsüberprüfung oder Diagnose muss dabei mit systemeigenen Mitteln realisiert werden, sogenannten "On-Board-Diagnose" oder kurz OBD. Für die mit wenigstens einem Zusatzventil arbeitende Abgasrückführeinrichtung bedeutet dies, dass die ordnungsgemäße Funktion des wenigstens einen Zusatzventils ebenfalls mittels OBD überprüft werden soll.

Aus der DE 10 2006 056 367 A1 ist ein Verfahren zur Diagnose eines diskontinuierlich arbeitenden Abgasrückführventils bekannt, das zum Einstellen einer Abgasrückführrate bei einer Abgasrückführeinrichtung einer Brennkraftmaschine in einer Abgasrückführleitung der Brennkraftmaschine angeordnet ist. Beim bekannten Verfahren wird im Allgemeinen während des Betriebs der Brennkraftmaschine eine einem aktuellen Betriebspunkt der Brennkraftmaschine zugeordnete und mit dem Abgasrückführventil eingestellte Abgasrückführrate durch eine entsprechende Betätigung des Abgasrückführventils vorübergehend verändert, während zur Diagnose des Abgasrückführventils die Änderung zumindest eines von der Abgasrückführrate abhängigen Betriebsparameters der Brennkraftmaschine ausgewertet wird. Im Speziellen wird beim bekannten Verfahren bei ausgeschaltetem Abgasrückführventil eine Testrückführrate ermittelt und mit einer Durchschnittsrückführrate verglichen, die bei eingeschaltetem Abgasrückführventil ermittelt wird.

Die vorliegende Erfindung beschäftigt sich mit dem Problem, ein Verfahren zur Diagnose zumindest eines solchen Zusatzventils anzugeben bzw. hierfür eine verbesserte Ausführungsform anzugeben, die sich insbesondere durch eine preiswerte Realisierbarkeit auszeichnet.

Erfindungsgemäß wird dieses Problem durch den Gegenstand des unabhängigen Anspruchs gelöst. Vorteilhafte Ausführungsformen sind Gegenstand der abhängigen Ansprüche.

Die Erfindung beruht auf dem allgemeinen Gedanken, das jeweilige Zusatzventil vorübergehend anders anzusteuern als dies für den aktuellen Betriebszustand der Brennkraftmaschine an sich vorgesehen ist, um die gewünschte Abgasrückführrate oder kurz AGR-Rate einzustellen. Gleichzeitig wird zumindest die hier relevante Veränderung wenigstens eines Betriebsparameters der Brennkraftmaschine überwacht, der mit der AGR-Rate korreliert bzw. davon abhängt. Mit anderen Worten, das Steuerungssystem, das bestimmten Betriebszuständen der Brennkraftmaschine zugehörige AGR-Raten zuordnet und zum Einstellen derselben das jeweilige Zusatzventil auf bestimmte Weise betätigt, wird vorübergehend verstimmt, um die Reaktion des Systems bzw. die Auswirkung auf die eingestellte AGR-Rate zu beobachten. Bei einer ordnungsgemäßen Funktion des jeweiligen Zusatzventils wird sich eine messbare Änderung der AGR-Rate einstellen. Bei fehlerhafter Funktion des jeweiligen AGR-Systems kann insbesondere eine Änderung der AGR-Rate ausbleiben. Die Reaktion des Systems in Form einer Änderung der AGR-Rate kann somit zur Beurteilung der Funktionsfähigkeit, also zur Diagnose des jeweiligen Zusatzventils verwendet werden.

Im einzelnen schlägt die Erfindung hierfür vor, während des Betriebs der Brennkraftmaschine eine AGR-Rate, die einem aktuellen Betriebspunkt der Brennkraftmaschine zugeordnet ist und die mit dem wenigstens einen Zusatzventil eingestellt ist, vorübergehend zu verändern, und zwar durch eine entsprechende Betätigung des wenigstens einen Zusatzventils, dessen Funktionalität diagnostiziert werden soll. Zur Diagnose des jeweiligen Zusatzventils wird nun die Änderung zumindest eines von der AGR-Rate abhängigen Betriebsparameters der Brennkraftmaschine ausgewertet.

Hierzu kann gemäß einer einfachen Ausführungsform die Änderung des wenigstens einen Betriebsparameters dadurch bestimmt werden, dass der Wert dieses Betriebsparameters am Ende eines vorbestimmten Zeitraums erfasst ist. Zur Diagnose des jeweiligen Zusatzventils kann nun der gemessene Endwert des Betriebsparameters mit einem für die veränderte Abgasrückführrate erwarteten Referenzwert verglichen werden. Dieser Vergleich kann beispielsweise durch eine Differenzbildung realisiert werden.

Alternativ hierzu kann bei einer aufwändigeren Ausführungsform die Änderung des jeweiligen Betriebsparameters dadurch bestimmt werden, dass der zeitliche Verlauf des Werts des jeweiligen Betriebsparameters erfasst wird. Zur Diagnose des jeweiligen Zusatzventils kann nun der erfasste zeitliche Verlauf des Betriebsparameters ausgewertet werden.

Um die Betätigung des Zusatzventils für diese Diagnose zu verändern, kann grundsätzlich auf unterschiedliche Weise vorgegangen werden. Bei einer üblichen Bauweise wird das Zusatzventil für den Normalbetrieb der Abgasrückführeinrichtung mit Hilfe von Kennfeldern betrieben, in denen Steuersignale für das jeweilige Zusatzventil in Abhängigkeit der einzustellenden AGR-Rate für viele unterschiedliche Betriebszustände oder Betriebspunkte der Brennkraftmaschine abgelegt sind. Für die Diagnose kann einer für die Betätigung des jeweiligen Zusatzventils vorgesehenen Steuerung eingangsseitig ein veränderter Betriebspunkt oder Betriebszustand der Brennkraftmaschine vorgegeben werden, der vom tatsächlichen Betriebspunkt/Betriebszustand abweicht. Geht die Steuerung mit diesem "falschen" Betriebspunkt/Betriebszustand in die zugehörigen Kennfelder, ergibt sich automatisch eine andere AGR-Rate mit dementsprechend anderen Steuersignalen für das jeweilige Zusatzventil. Ebenso ist es grundsätzlich möglich, den Wert für die einzustellende AGR-Rate vorübergehend zu verändern, wodurch ebenfalls die davon abhängigen Steuersignale zur Betätigung des jeweiligen Zusatzventils verändert werden. Ebenso ist es möglich, direkt die Steuersignale zur Betätigung des Zusatzventils zu verändern.

Für die Auswertung des zeitlichen Verlaufs des wenigstens einen Betriebsparameters ist es zweckmäßig, diesen zeitlichen Verlauf zu messen und ggf. in einem geeigneten Speicher zu speichern. Zur Diagnose des wenigstens einen Zusatzventils kann es gemäß einer vorteilhaften Ausführungsform nun vorgesehen sein, den gemessen zeitlichen Verlauf des wenigstens einen Betriebsparameters mit einem für die veränderte AGR-Rate erwarteten zeitlichen Verlauf zu vergleichen. Mit anderen Worten, für die Diagnose wird für den jeweiligen Betriebspunkt der Brennkraftmaschine die AGR-Rate bzw. der Steuerzustand des jeweiligen Zusatzventils nicht beliebig variiert, sondern gezielt, so dass sich eine bestimmte andere AGR-Rate einstellen soll. Die dadurch ausgelösten Änderungen im zeitlichen Verlauf von Betriebsparametern, die von der AGR-Rate abhängen, lassen sich im Vorfeld berechnen oder aber durch Prüfstandsversuche oder Feldversuche ermitteln. Sofern nun die gemessene Reaktion des Systems, also der gemessene zeitliche Verlauf des jeweiligen Betriebsparameters mit der erwarteten Systemreaktion, also mit dem erwarteten zeitlichen Verlauf im wesentlichen übereinstimmt, kann davon ausgegangen werden, dass das jeweilige Zusatzventil ordnungsgemäß funktioniert. Tritt jedoch eine signifikante Abweichung zwischen dem gemessenen Verlauf und dem erwarteten Verlauf auf, kann eine Fehlfunktion diagnostiziert werden. Entsprechendes gilt in vereinfachter Form auch für den Fall, dass vom jeweiligen Betriebsparameter lediglich der am Ende einer vorbestimmten Zeitspanne vorliegende Endwert ermittelt und mit einem erwarteten Referenzwert verglichen wird, der z. B. durch Prüfstandsversuche oder dgl. im Vorfeld ermittelt werden kann.

Besonders zweckmäßig ist eine Ausführungsform, bei welcher zum Auswerten solche Betriebsparameter verwendet werden, die von einer Motorsteuerung der Brennkraftmaschine zumindest im Normalbetrieb bereits für wenigstens einen anderen Zweck genutzt werden. Mit anderen Worten, die Diagnose des jeweiligen Zusatzventils lässt sich anhand von Betriebsparametern durchführen, die in der Motorsteuerung ohnehin schon bereitstehen. Beispielsweise kann hierdurch auf eine zusätzliche Sensorik verzichtet werden, was den Aufwand zur Realisierung des vorgeschlagenen Diagnoseverfahrens erheblich reduziert. Im Idealfall muss lediglich eine kommunizierende Verbindung zwischen der Steuerung der Abgasrückführeinrichtung und der Motorsteuerung hergestellt werden. Da die Steuerung der Abgasrückführeinrichtung hardwaremäßig in ein Steuergerät integriert werden kann, welches die Motorsteuerung enthält, ist der Aufwand zum Herstellen einer geeigneten, datenübertragenden Verbindung gering und lässt sich beispielsweise über geeignete Schnittstellen realisieren. Da es ferner möglich ist, die Steuerung der Abgasrückführeinrichtung softwaremäßig in die Motorsteuerung zu implementieren, ist zur Kopplung der Steuerungen nur noch eine Softwareschnittstelle erforderlich, was den Aufwand zur Realisierung des erfindungsgemäßen Diagnoseverfahrens nochmals reduziert.

Betriebsparameter, die von der AGR-Rate abhängen und die sich in besonderer Weise zur Auswertung der Systemreaktion und somit zur Diagnose des jeweiligen Zusatzventils eignen, werden im folgenden näher erläutert. Die Erfindung nutzt hierbei die Erkenntnis, dass die AGR-Rate einen signifikanten Einfluss auf die maximale Verbrennungstemperatur in den Zylindern der Brennkraftmaschine hat. Diese Verbrennungstemperatur beeinflusst maßgeblich die Abgastemperatur der Brennkraftmaschine. Weiter hängt die Stickoxidbildung während der Verbrennungsreaktion überproportional von der Verbrennungstemperatur ab. Eine Absenkung der Verbrennungstemperatur kann somit zu einer deutlichen Reduzierung der Stickoxidemissionen genutzt werden. Die rückgeführten Abgase werden vor ihrer Einleitung in die Frischgasleitung gekühlt. Bei einer externen Abgasrückführung kann hierzu ein Abgasrückführkühler vorgesehen sein. Verantwortlich für die verbesserten Emissionswerte durch Abgasrückführung ist dabei der Einfluss des rückgeführten Abgases auf die Verbrennungstemperatur in den Zylindern. Dies kann insbesondere auf den reduzierten Sauerstoffgehalt des Frischgas-Abgas-Gemischs zurückgeführt werden.

Die übliche Auslegung der AGR-Einrichtung erfolgt so, dass quasi in jedem Betriebspunkt der Brennkraftmaschine die AGR-Rate so gewählt wird, dass sich ein Minimum für die Stickoxidemissionen einstellt. In der Folge führt bei einer solchen Auslegung jede Verstimmung des funktionierenden Systems zu einer Zunahme der Stickoxide.

Für die Auswertung der Systemreaktion im Rahmen der Diagnose des jeweiligen Zusatzventils ergeben sich nun folgende Möglichkeiten, die hier rein exemplarisch aufgezählt sind und ohne Beschränkung der Allgemeinheit sind. Insbesondere sollen andere, hier nicht erwähnte Betriebsparameter nicht ausgeschlossen sein.

Beispielsweise kann die Temperatur im Abgas als Betriebsparameter überwacht werden. Eine Änderung der AGR-Rate führt zu einer Änderung der Verbrennungstemperatur und somit zu einer Änderung der Abgastemperatur. In der Abgasleitung können Temperatursensoren ohnehin vorhanden sein. Insbesondere bei einer aufgeladenen Brennkraftmaschine, die beispielsweise mit einem Abgasturbolader arbeitet, können vor und/oder nach der Turbine des Turboladers Temperatursensoren vorgesehen sein.

Zusätzlich oder alternativ kann als Betriebsparameter der Sauerstoffgehalt im Abgas herangezogen werden. Der Sauerstoffgehalt wird üblicherweise durch die Luftzahl oder durch das Brennstoff-Luftverhältnis bestimmt. Dieser Lambda-Wert kann beispielsweise mittels einer Lambda-Sonde im Abgas gemessen werden. Besonders eignet sich hierzu eine Breitband-Lambda-Sonde. Durch die geänderte AGR-Rate ändert sich automatisch auch der Lambda-Wert im Abgas. Derartige LambdaSonden sind in den Abgasanlagen moderner Kraftfahrzeuge standard.

Zusätzlich oder alternativ kann die Drehzahl des Turboladers bei einer aufgeladenen Brennkraftmaschine als Betriebsparameter herangezogen werden. Ein geeigneter Drehzahlsensor kann bei einem modernen Abgasturbolader ohnehin vorhanden sein. Da sich die Abgastemperatur wie erläutert in Abhängigkeit der AGR-Rate signifikant ändert, ändert sich dadurch auch die Enthalpie des Abgases. Je höher die Abgastemperatur, desto höher ist die Abgasenthalpie. Eine erhöhte Enthalpie führt jedoch zu einer erhöhten Antriebsleistung an der Turbine, wodurch deren Drehzahl und somit auch die Drehzahl des Verdichters, also letztlich die Drehzahl des Turboladers steigt. Bei einer Entnahme des rückzuführenden Abgases an der Hochdruckseite des Turboladers, sogenannte Hochdruck-Abgasrückführung, führt eine Änderung der AGR-Rate zu einer signifikanten Veränderung des der Turbine des Turboladers zugeführten Massenstroms. Eine Erhöhung der AGR-Rate führt somit zu einer Reduzierung der Drehzahl der Turbine.

Zusätzlich oder alternativ kann als Betriebsparameter die NOₓ-Konzentration im Abgas herangezogen werden. Hierzu geeignete NOₓ-Sensoren können bei modernen Abgasanlagen beispielweise für NOₓ-Speicherkatalysatoren oder für Denox-Katalysatoren ohnehin vorhanden sein. Da die Verbrennungstemperatur einen signifikanten Einfluss auf die NOₓ-Bildung während der Verbrennungsreaktion hat und da ferner die AGR-Rate einen starken Einfluss auf die Verbrennungstemperatur hat, kann bereits eine geringfügig reduzierte AGR-Rate eine leicht messbare Erhöhung der NOₓ-Konzentration im Abgas verursachen.

Zusätzlich oder alternativ kann als Betriebsparameter der Frischgasmassenstrom in der Frischgasleitung herangezogen werden. Hierzu geeignete Sensoren, wie z.B. ein Heißfilmmesser, sind in der Frischgasleitung ohnehin verbaut. Da die AGR-Rate direkt den Frischgasbedarf der Brennkraftmaschine beeinflusst, führt eine Änderung der AGR-Rate auch zu einer entsprechenden Änderung des der Brennkraftmaschine zugeführten Frischgasmassenstroms.

Zusätzlich oder alternativ kann als Betriebsparameter der Druck in einer Abgasrückführleitung herangezogen werden. Diese Abgasrückführleitung verbindet die abgasseitige Entnahmestelle mit der frischgasseitigen Einleitstelle. Hier kann eine statische Druckmessung durchgeführt werden. Ein derartiger Drucksensor kann bei bestimmten AGR-Einrichtungen bereits vorhanden sein. Die einstellbare AGR-Rate hängt von der Druckdifferenz zwischen Entnahmestelle und Einleitstelle ab. Dementsprechend besteht ein unmittelbarer Zusammenhang zwischen der AGR-Rate und dem Druckniveau in der AGR-Leitung. Zusätzlich oder alternativ kann auch die Temperatur des Abgases innerhalb der Abgasrückführleitung als Betriebsparameter herangezogen werden. Auch hier eignet sich eine statische Temperaturmessung, da sich das Temperaturniveau in dem durch die AGR-Leitung geführten Abgas ebenfalls mit der AGR-Rate verändert. Je höher die AGR-Rate, desto höher ist die Temperatur, da weniger Wärme über die AGR-Leitung abfließen kann.

Zusätzlich oder alternativ kann auch die Temperatur eines Kühlmittels des weiter oben bereits genannten AGR-Kühlers als Betriebsparameter herangezogen werden. Hier eignet sich eine statische Temperaturmessung. Je höher die AGR-Rate, desto mehr Abgas muss mit Hilfe des AGR-Kühlers gekühlt werden, umso höher ist auch die mit Hilfe des Kühlmittels abzuführende Wärme. Dementsprechend steigt die Temperatur des Kühlmittels mit der AGR-Rate.

Die vorstehend genannten Betriebsparameter sowie andere von der AGR-Rate abhängige Betriebsparameter der Brennkraftmaschine lassen sich einzeln oder in beliebiger Kombination zur Diagnose des jeweiligen Zusatzventils auswerten.

Die Veränderung der AGR-Rate zum Zwecke der Diagnose erfolgt durch eine veränderte Ansteuerung des jeweiligen Zusatzventils. Diese Betätigung des Zusatzventils lässt sich gegenüber der "normalen" Betätigung, die im Normalbetrieb der AGR-Einrichtung vorliegt, auf unterschiedliche Weise variieren. Beispielsweise kann das wenigstens eine Zusatzventil zum Verändern der AGR-Rate vorübergehend deaktiviert werden. Insbesondere Zusatzventile, die zum Einstellen der jeweiligen AGR-Rate Druckschwingungen erzeugen oder verstärken, verursachen im deaktivierten Zustand ein starkes Absinken der AGR-Rate. Es ist klar, dass ein derartiges Zusatzventil im deaktivierten Zustand den Frischgastrakt bzw. den Abgastrakt nicht verschließt. Insbesondere nimmt ein Ventilglied des Zusatzventils hierbei eine möglichst neutrale Stellung ein.

Insbesondere bei Zusatzventilen, die schnellarbeitend ausgestaltet sind, um mittels Druckschwankungen im Abgas bzw. im Frischgas die AGR-Rate einzustellen, kann es zweckmäßig sein, das jeweilige Zusatzventil zum Verändern der AGR-Rate vorübergehend mit einem anderen Öffnungszeitpunkt und zusätzlich oder alternativ mit einem anderen Schließzeitpunkt und zusätzlich oder alternativ mit einer anderen Taktfrequenz zum Öffnen und Schließen zu betätigen. Die Erzeugung und die Verstärkung von Druckimpulsen im Frischgas bzw. im Abgas nutzt Resonanzeffekte. Hierbei kommt es auf die möglichst exakte Einhaltung der Taktfrequenz, der Öffnungszeitpunkte bzw. der Schließzeitpunkte an. Eine gezielte Abweichung bei zumindest einem diesem Parameter führt zu einer merklichen Veränderung der AGR-Rate.

Besonders vorteilhaft ist eine Ausführungsform des Diagnoseverfahrens, die so ausgestaltet ist, dass das Diagnoseverfahren nur während eines stationären Betriebszustands der Brennkraftmaschine durchgeführt wird. Beispielsweise kann die Diagnose während eines Leerlaufbetriebs, insbesondere bei stehendem Fahrzeug, oder während eines Schubbetriebs des Fahrzeugs durchgeführt werden. Bei einem stationären Betriebszustand vereinfachen sich die Messung und Auswertung der Betriebsparameter für die Diagnose des jeweiligen Zusatzventils.

Vorteilhaft kann das Diagnoseverfahren auch während eines hinsichtlich der Schadstoffemissionen der Brennkraftmaschine unkritischen Betriebszustands durchgeführt werden. Ein derartiger unkritischer Betriebszustand kann beispielsweise während des Schubbetriebs des Fahrzeugs auftreten.

Bei einer anderen vorteilhaften Ausführungsform kann das Diagnoseverfahren so durchgeführt werden, dass das wenigstens eine Zusatzventil nur für einen relativ kurzen Zeitraum vorübergehend zum Verändern der AGR-Rate angesteuert wird. Denkbar ist beispielsweise ein Zeitraum von maximal 3.600° Kurbelwellenwinkel, also von maximal 10 Umdrehungen der Kurbelwelle. Sofern das jeweilige Zusatzventil als schnellschaltendes Ventil ausgeschaltet ist, sind auch kürzere Zeiträume denkbar. Insbesondere bei einer Ausführungsform, bei der das jeweilige Zusatzventil die AGR-Rate zylinderselektiv einstellen kann, können bereits ein oder zwei Umdrehungen der Kurbelwelle ausreichen, die ordnungsgemäße Funktion des Zusatzventils zu überprüfen. Es ist klar, dass hierbei die relevante Sensorik den jeweiligen Betriebsparameter ebenfalls zylinderselektiv erfassen muss. Entsprechende Reaktionszeiten für den jeweiligen Sensor müssen dabei vorhanden sein.

Sofern mehrere Zusatzventile vorgesehen sind, beispielsweise in je einem von einem Frischgasverteiler zu einem Zylinder führenden Frischgasrohr oder in zwei oder mehr parallelen, stromauf des Frischgasverteilers angeordneten Frischgaspfaden, kann vorgesehen sein, jedes Zusatzventil einzelnen zum vorübergehenden Verändern der AGR-Rate anzusteuern, während das jeweils andere Zusatzventil bzw. während die jeweils anderen Zusatzventile zum Einstellen der dem aktuellen Betriebspunkt zugeordneten "richtigen" AGR-Rate betätigt wird, bzw. werden. Auf diese Weise lassen sich mehrere Zusatzventile einzeln und unabhängigen von den anderen Zusatzventilen nacheinander diagnostizieren. Hierdurch ist es beispielsweise möglich, die Brennkraftmaschine auch dann in einem emissionsrelevanten Betriebspunkt zu testen, wenn beispielweise nur noch fünf von sechs Zylindern hinsichtlich der Emissionswerte optimal arbeiten.

Sofern jedem Zylinder der Brennkraftmaschine ein separates Zusatzventil zugeordnet ist, wird die Auswertung des wenigstens einen Betriebsparameters zylinderselektiv durchgeführt. Wie erwähnt ist hierzu eine entsprechend dynamische Sensorik erforderlich.

## Patentansprüche

1. Verfahren zur Diagnose wenigstens eines Zusatzventils, das zum Einstellen einer Abgasrückführrate bei einer Abgasrückführeinrichtung einer Brennkraftmaschine in einer Frischgasleitung der Brennkraftmaschine oder in einer Abgasleitung der Brennkraftmaschine oder in einer Abgasrückführleitung der Brennkraftmaschine angeordnet ist,
- bei dem während des Betriebs der Brennkraftmaschine eine einem aktuellen Betriebspunkt der Brennkraftmaschine zugeordnete und mit dem wenigstens einen Zusatzventil eingestellte Abgasrückführrate durch eine entsprechende Betätigung des wenigstens einen Zusatzventils vorübergehend verändert wird,
- bei dem zur Diagnose des wenigstens einen Zusatzventils die Änderung zumindest eines von der Abgasrückführrate abhängigen Betriebsparameters der Brennkraftmaschine ausgewertet wird,
**dadurch gekennzeichnet,**
**dass** das Verfahren zur Diagnose wenigstens eines kontinuierlich arbeitenden Zusatzventils verwendet wird, dessen Ventilglied permanent in Bewegung ist und dabei zyklisch unterschiedliche Schaltzustände durchläuft.

2. Verfahren nach Anspruch 1,
**dadurch gekennzeichnet,**
**dass** zur Bestimmung der Änderung des wenigstens einen Betriebsparameters der Wert des Betriebsparameters am Ende eines vorbestimmten Zeitraums erfasst wird, wobei zur Diagnose des wenigstens einen Zusatzventils der gemessene Endwert des wenigstens einen Betriebsparameters mit einem für die veränderte Abgasrückführrate erwarteten Referenzwert verglichen wird.

3. Verfahren nach Anspruch 1,
**dadurch gekennzeichnet,**
**dass** zur Bestimmung der Änderung des wenigstens einen Betriebsparameters der zeitliche Verlauf des Werts des Betriebsparameters erfasst wird.

4. Verfahren nach Anspruch 3,
**dadurch gekennzeichnet,**
**dass** zur Diagnose des wenigstens einen Zusatzventils der gemessene zeitliche Verlauf des wenigstens einen Betriebsparameters mit einem für die veränderte Abgasrückführrate erwarteten zeitlichen Verlauf verglichen wird.

5. Verfahren nach einem der Ansprüche 1 bis 4,
**dadurch gekennzeichnet,**
**dass** der zum Auswerten verwendete wenigstens eine Betriebsparameter von einer Motorsteuerung der Brennkraftmaschine auch für wenigstens einen anderen Zweck genutzt wird.

6. Verfahren nach einem der Ansprüche 1 bis 5,
**dadurch gekennzeichnet,**
**dass** das wenigstens eine Zusatzventil zum Verändern der Abgasrückführrate vorübergehend deaktiviert wird.

7. Verfahren nach einem der Ansprüche 1 bis 5,
**dadurch gekennzeichnet,**
**dass** das wenigstens eine Zusatzventil zum Verändern der Abgasrückführrate vorübergehend mit einem anderen Öffnungszeitpunkt und/oder mit einem anderen Schließzeitpunkt und/oder mit einer anderen Taktfrequenz zum Öffnen und Schließen betätigt wird.

8. Verfahren nach einem der Ansprüche 1 bis 7,
**dadurch gekennzeichnet,**
**dass** das Diagnoseverfahren während eines stationären Betriebszustands der Brennkraftmaschine durchgeführt wird.

9. Verfahren nach einem der Ansprüche 1 bis 8,
**dadurch gekennzeichnet,**
**dass** das Diagnoseverfahren während eines hinsichtlich der Schadstoffemissionen der Brennkraftmaschine unkritischen Betriebszustand durchgeführt wird.

10. Verfahren nach einem der Ansprüche 1 bis 9,
**dadurch gekennzeichnet,**
**dass** das wenigstens eine Zusatzventil nur für einen Zeitraum von maximal 3.600° Kurbelwellenwinkel zum Verändern der Abgasrückführrate angesteuert wird.

11. Verfahren nach einem der Ansprüche 1 bis 10,
**dadurch gekennzeichnet,**
**dass** bei mehreren Zusatzventilen jedes einzeln zum vorübergehenden Verändern der Abgasrückführrate angesteuert wird, während das andere Zusatzventil oder die anderen Zusatzventile zum Einstellen der zum aktuellen Betriebspunkt zugeordneten Abgasrückführrate betätigt wird oder werden.

12. Verfahren nach Anspruch 11,
**dadurch gekennzeichnet,**
**dass** jedem Zylinder der Brennkraftmaschine ein separates Zusatzventil zugeordnet ist, wobei die Auswertung des mindestens einen Betriebsparameters zylinderselektiv durchgeführt wird.

## Claims

1. A method for diagnosing at least one additional valve which, for adjusting an exhaust gas recycling rate in an exhaust gas recycling system of an internal combustion engine, is arranged in a fresh gas line of the internal combustion engine or in an exhaust gas line of the internal combustion engine or in an exhaust gas recycling line of the internal combustion engine,
- in which during the operation of the internal combustion engine, an exhaust gas rate associated with a current operating point of the internal combustion engine and adjusted with the at least one additional valve is temporarily changed by a corresponding actuation of the at least one additional valve,
- in which for diagnosing the at least one additional valve, the change of at least one operating parameter of the internal combustion engine dependent on the exhaust gas recycling rate is evaluated,
**characterized in**
**that** the method is used for diagnosing at least one continuously operating valve, wherein a valve member of said continuously operating valve is permanently in motion thereby cyclically undergoing different switching states.

2. The method according to claim 1,
**characterized in**
**that** for determining the change of the at least one operating parameter, the value of the operating parameter is recorded at the end of a predefined time period, wherein for diagnosing the at least one additional valve, the measured end value of the at least one operating parameter is compared with a reference value expected for the changed exhaust gas recycling rate.

3. The method according to claim 1,
**characterized in**
**that** for determining the change of the at least one operating parameter, the chronological sequence of the value of the operating parameter is recorded.

4. The method according to claim 3,
**characterized in**
**that** for diagnosing the at least one additional valve, the measured chronological sequence of the at least one operating parameter is compared with a chronological sequence expected for the changed exhaust gas recycling rate.

5. The method according to any one of the claims 1 to 4,
**characterized in**
**that** the at least one operating parameter used for evaluating is also used by an engine control of the internal combustion engine for at least one different purpose.

6. The method according to any one of the claims 1 to 5,
**characterized in**
**that** the at least one additional valve is temporarily deactivated for changing the exhaust gas recycling rate.

7. The method according to any one of the claims 1 to 5,
**characterized in**
**that** for opening and closing, the at least one additional valve is temporarily actuated with a different opening time and/or with a different closing time and/or with a different clock frequency.

8. The method according to any one of the claims 1 to 7,
**characterized in that** the method for diagnosing is carried out during a stationary operating state of the internal combustion engine.

9. The method according to any one of the claims 1 to 8,
**characterized in**
**that** the method for diagnosing is carried out during an operating state which is uncritical with respect to the pollutant emission of the internal combustion engine.

10. The method according to any one of the claims 1 to 9,
**characterized in**
**that** the at least one additional valve is controlled only for a time period of maximum 3,600° crankshaft angle for changing the exhaust gas recycling rate.

11. The method according to any one of the claims 1 to 10,
**characterized in**
**that** in case of a plurality of additional valves, each one is controlled individually for changing the exhaust gas recycling rate, whereas the other additional valve or the other additional valves is actuated or are actuated for adjusting the exhaust gas recycling rate associated with the current operating point.

12. The method according to claim 11,
**characterized in**
**that** to each cylinder of the internal combustion engine, a separate additional valve is allocated, wherein the evaluation of the at least one operating parameter is carried out in a cylinder-selective manner.

## Revendications

1. Procédé de diagnostic d'au moins une soupape auxiliaire qui, pour régler un taux de recyclage de gaz d'échappement dans un dispositif de recyclage de gaz d'échappement d'un moteur à combustion interne, est disposée dans une conduite de gaz frais du moteur à combustion interne ou dans une conduite de gaz d'échappement du moteur à combustion interne ou dans une conduite de recyclage de gaz d'échappement du moteur à combustion interne,
- dans lequel, durant le fonctionnement du moteur à combustion interne, un taux de recyclage de gaz d'échappement qui est associé à un point de fonctionnement actuel du moteur à combustion interne et qui est réglé au moyen de ladite au moins une soupape auxiliaire est modifié temporairement par une commande correspondante de ladite au moins une soupape auxiliaire,
- dans lequel, pour le diagnostic de ladite au moins une soupape auxiliaire, on évalue le changement d'au moins un paramètre de fonctionnement du moteur à combustion interne, qui est fonction dudit taux de recyclage de gaz d'échappement,
**caractérisé par le fait**
**que** le procédé est mis en oeuvre pour le diagnostic d'au moins une soupape auxiliaire travaillant de façon continue dont l'élément de soupape est en mouvement de manière permanente tout en passant par des états de commutation cycliquement différents.

2. Procédé selon la revendication 1, **caractérisé par le fait que**, pour déterminer le changement dudit au moins un paramètre de fonctionnement, on saisit la valeur du paramètre de fonctionnement au bout d'un espace de temps prédéterminé, dans lequel, pour le diagnostic de ladite au moins une soupape auxiliaire, la valeur finale mesurée dudit au moins un paramètre de fonctionnement est comparée à une valeur de référence attendue pour le taux modifié de recyclage de gaz d'échappement.

3. Procédé selon la revendication 1, **caractérisé par le fait que**, pour déterminer le changement dudit au moins un paramètre de fonctionnement, on saisit la variation dans le temps de la valeur du paramètre de fonctionnement.

4. Procédé selon la revendication 3, **caractérisé par le fait que**, pour le diagnostic de ladite au moins une soupape auxiliaire, la variation dans le temps mesurée dudit au moins un paramètre de fonctionnement est comparée à une variation dans le temps attendue pour le taux modifié de recyclage de gaz d'échappement.

5. Procédé selon l'une quelconque des revendications 1 à 4, **caractérisé par le fait que** ledit au moins un paramètre de fonctionnement utilisé pour l'évaluation est utilisé par une commande de moteur du moteur à combustion interne également à au moins une autre fin.

6. Procédé selon l'une quelconque des revendications 1 à 5, **caractérisé par le fait que**, pour modifier le taux de recyclage de gaz d'échappement, ladite au moins une soupape auxiliaire est désactivée temporairement.

7. Procédé selon l'une quelconque des revendications 1 à 5, **caractérisé par le fait que**, pour modifier le taux de recyclage de gaz d'échappement, ladite au moins une soupape auxiliaire est actionnée temporairement avec un moment d'ouverture différent et/ou avec un moment de fermeture différent et/ou à une fréquence de cadence différente d'ouverture et de fermeture.

8. Procédé selon l'une quelconque des revendications 1 à 7, **caractérisé par le fait que** le procédé de diagnostic est mis en oeuvre durant un état de fonctionnement stationnaire du moteur à combustion interne.

9. Procédé selon l'une quelconque des revendications 1 à 8, **caractérisé par le fait que** le procédé de diagnostic est mis en oeuvre durant un état de fonctionnement non critique en ce qui concerne les émissions polluantes du moteur à combustion interne.

10. Procédé selon l'une quelconque des revendications 1 à 9, **caractérisé par le fait que**, pour modifier le taux de recyclage de gaz d'échappement, ladite au moins une soupape auxiliaire n'est commandée que pour un espace de temps d'un angle de vilebrequin de 3.600 ° au maximum.

11. Procédé selon l'une quelconque des revendications 1 à 10, **caractérisé par le fait que**, dans le cas de plusieurs soupapes auxiliaires, chacune est commandée individuellement pour modifier temporairement le taux de recyclage de gaz d'échappement, tandis que l'autre soupape auxiliaire ou les autres soupapes auxiliaires est ou sont actionnée(s) pour régler le taux de recyclage de gaz d'échappement associé au point de fonctionnement actuel.

12. Procédé selon la revendication 11, **caractérisé par le fait qu'**à chaque cylindre du moteur à combustion interne est associée une soupape auxiliaire séparée, l'évaluation dudit au moins un paramètre de fonctionnement étant réalisée de manière sélective par cylindre.
